# FASCICULE DE BREVET EUROPEEN

(11) **EP 0 488 453 B1**
(45) Date de publication et mention de la délivrance du brevet: **07.09.1994**
(21) Numéro de dépôt: 91203049.1
(22) Date de dépôt: 21.11.1991
(51) Int. Cl.: F02K 1/09, F02K 1/74

(54) **Tuyère d'éjection variable pour moteur à réaction**
Variable Schubduse für einen Strahlmotor
Variable ejection nozzle for a jet engine

(30) Priorité: 28.11.1990 FR 9014984
(43) Date de publication de la demande: 03.06.1992
(73) Titulaire: CONCEPTION AERONAUTIQUE DU SUD OUEST, F-31700 Blagnac (FR)
(72) Inventeur: Fage, Etienne, F-83350 Ramatuelle (FR)
(74) Mandataire: Barre, Philippe

(56) Documents cités:
- DE-A- 1 526 855
- FR-A- 1 458 200
- GB-A- 1 119 608
- GB-A- 1 199 001
- GB-A- 2 009 063
- US-A- 2 570 629
- US-A- 3 138 921
- US-A- 3 797 785

## Description

L'invention concerne une tuyère d'éjection à section de sortie variable pour moteur à réaction. Elle vise tout particulièrement une tuyère centrale d'éjection de gaz chauds destinée à équiper un moteur à réaction à flux séparés dont la tuyère périphérique d'éjection des gaz froids est dotée d'un dispositif d'inversion de poussée. L'invention s'étend aux moteurs à réaction équipés d'une telle tuyère.

On sait que, pour raccourcir la distance d'arrêt d'un avion à réaction ou accroître la sécurité de freinage sur piste humide ou glacée, les réacteurs de l'avion sont actuellement équipés d'un dispositif d'inversion de poussée qui inverse le jet et produit une contre-poussée de freinage.

Dans le cas d'un réacteur à flux séparés, ce dispositif d'inversion de poussée est installé sur la tuyère périphérique d'éjection des gaz froids, car il s'est avéré impraticable de maintenir un tel dispositif en service dans la tuyère centrale d'éjection des gaz chauds en raison de la haute température du flux qui traverse celle-ci. Dans ces conditions, l'inversion de poussée n'affecte que le flux froid et la contre-poussée globale obtenue (différence entre la contre-poussée développée par le flux froid et la poussée directe développée par le flux chaud) demeure faible, généralement de l'ordre de 15 à 20 % de la poussée totale en jet direct.

Par ailleurs, par temps chaud, la vitesse du générateur de gaz chauds est limitée par la température maximum admissible des gaz et le moteur doit être utilisé à régime réduit afin d'éviter des surtempératures ; la poussée s'en trouve notablement diminuée, ce qui représente un inconvénient majeur en phase de décollage.

Les brevets US 3.797.785 et 3.829.020 décrivent une tuyère de réacteur à flux mélangés, qui comporte, dans le prolongement de la paroi fixe de tuyère, une chemise mobile susceptible de reculer en regard du corps central pour accroître la section de sortie ; lors de l'atterrissage, le déplacement de cette chemise arme les inverseurs de poussée. Un tel dispositif qui comporte des organes mécaniques immergés dans le flux, est admissible pour une tuyère à flux mélangés où les températures sont relativement modérées, mais ne l'est pas pour une tuyère centrale de réacteur à flux séparés en raison, comme déjà évoqué, des hautes températures régnant au coeur du flux chaud. De plus, le dispositif décrit dans ce brevet introduit des discontinuités dans la paroi interne de tuyère, qui sont préjudiciables au rendement en régime de jet direct et entraînent des risques de fuite de gaz. En outre, un tel dispositif n'est pas applicable en l'absence d'un corps central de réacteur se prolongeant au-delà de la sortie de tuyère.

En outre, dans les brevets US 4.807.434 et FR 2.349.738 sont décrits des systèmes d'inversion de poussée disposés sur la tuyère périphérique d'éjection des gaz froids d'un réacteur à flux séparés. Ces systèmes comprennent une partie translatable axialement, qui est associée aux inverseurs de poussée ou joue le rôle d'inverseur de poussée en position aval. Toutefois, pour les raisons déjà évoquées, ces systèmes ne sont pas transposables sur une tuyère centrale d'éjection du flux chaud d'un réacteur à flux séparés.

Par ailleurs, le brevet FR 1.458.200 décrit une tuyère à corps central qui comprend une jupe arrière cylindrique, mobile axialement en regard du corps central en vue de faire varier la section. Toutefois, un tel dispositif n'est applicable que dans le cas des tuyères à corps central.

La présente invention se propose de remédier aux insuffisances des dispositifs connus et de fournir une nouvelle tuyère d'éjection, destinée à équiper un moteur à réaction et permettant de faire varier la section de sortie des gaz. L'invention vise en particulier à permettre d'augmenter la section de sortie d'une tuyère centrale à gaz chauds, en écartant toutes les difficultés connues provenant des risques de fuites ou des températures élevées qui règnent au coeur de ces gaz.

Un objectif de l'invention est ainsi, dans un moteur à réaction à flux séparés, d'assurer une réduction de la poussée du jet chaud lorsque les inverseurs de poussée sont mis en oeuvre sur le jet froid, afin d'atteindre une contrepoussée globale beaucoup plus élevée que dans les réacteurs à flux séparés connus.

Un autre objectif de l'invention est de permettre d'obtenir en jet direct une poussée accrue dans certaines conditions de vol, en particulier par temps chaud en phase de décollage.

Un autre objectif est de permettre une augmentation de la section de sortie aussi bien pour les moteurs à réaction munis d'un corps central qui se prolonge au niveau de la tuyère et émerge de celle-ci que pour les réacteurs dépourvus d'un tel corps central émergeant.

A cet effet, la tuyère d'éjection visée par l'invention, du type comportant une paroi fixe dont la chemise interne présente une forme convergente vers la sortie de tuyère, se caractèrise en ce qu'elle comprend :
- une jupe annulaire mobile axialement, disposée autour de la chemise interne et composée d'une portion amont cylindrique guidée par la paroi fixe de tuyère et d'une portion aval de forme convergente vers la sortie de tuyère, l'extrémité de ladite portion aval ayant un diamètre supérieur à celui de la section de sortie de la chemise interne,
- des moyens de déplacement axial de la jupe mobile, disposés autour et à l'extérieur de la chemise interne et adaptés pour permettre de mouvoir ladite jupe dans une translation axiale entre une position amont où la jupe est entièrement située en retrait autour de la chemise interne et une position aval où l'extrémité aval de la jupe est située à l'arrière de la section de sortie de la chemise interne,
- une couronne semi-flexible de jonction entre la jupe mobile et la chemise interne fixe, ladite couronne semi-flexible étant liée à la jupe de façon à se déplacer avec celle-ci et venant en appui élastique autour de la chemise interne de façon à demeurer au contact de la face externe de celle-ci au cours de son déplacement.

Ainsi, dans la position amont, la jupe mobile et ses moyens de déplacement, situés entièrement en retrait autour de la chemise interne de la tuyère, respectent totalement la forme interne de celle-ci et sa continuité ; aucune perturbation n'est introduite dans le flux, cependant qu'aucun organe mécanique ne se trouve plongé dans celui-ci de sorte que l'invention s'applique sans difficulté particulière aux tuyères à flux chauds et en particulier aux tuyères centrales des réacteurs à flux séparés. Le recul de la jupe l'amenant à faire saillie à l'arrière et autour de la chemise interne fixe engendre une augmentation de la section de sortie des gaz et permet d'adapter celle-ci à la phase de vol envisagée, soit, comme on le verra plus loin, phase d'inversion de poussée où l'augmentation de section entraîne une réduction de poussée du jet direct à régime moteur donné, soit phase de décollage, notamment par temps chaud, où l'augmentation de section entraîne une diminution de la température des gaz chauds permettant d'accroître la vitesse du générateur de gaz chauds (jusqu'à revenir à une température proche de la température maximum admissible), ce qui assure une augmentation momentanée de la poussée. La couronne semi-flexible qui peut en particulier être composée d'une pluralité de secteurs fixés à l'extrémité aval de la jupe mobile, assure la continuité de la face interne de tuyère lorsque la chemise mobile vient en position aval. Cette disposition est tout particulièrement intéressante lorsque l'augmentation de section vise à obtenir un accroissement de poussée en jet direct (phase de décollage par temps chaud), car elle évite des pertes dues à une perturbation du flux entre la sortie de chemise interne et l'extrémité aval de la jupe mobile.

Dans le cas où l'augmentation de section vise au contraire à obtenir une réduction de la poussée des gaz chauds (phase d'inversion de poussée sur le jet froid), des perturbations introduites dans le flux chaud contribuent à réduire la poussée développée par celui-ci. Selon une autre caractéristique de l'invention, la chemise interne de la tuyère peut alors comprendre des lumières d'échappement et des moyens d'obturation desdites lumières ; ces moyens sont agencés pour démasquer les lumières lorsque la jupe mobile parvient dans une position aval prédéterminée correspondant à la position d'inversion de poussée.

Ainsi, selon un mode de réalisation permettant d'optimiser les différents régimes de fonctionnement, la jupe mobile et ses moyens de déplacement sont adaptés pour permettre d'assigner à la jupe trois positions :
. une position amont, dite de croisière, où la jupe est située entièrement en retrait autour de la chemise interne,
. une position aval intermédiaire, dite de jet direct, où la jupe dépasse à l'arrière de la chemise interne et réalise une augmentation de la section de sortie comprise entre 5 % et 15 %, les lumières d'échappement demeurant entièrement obturées par les moyens d'obturation,
. une position aval extrême, dite d'inversion, où la jupe est située en arrière par rapport à la position précédente et réalise une augmentation de la section de sortie comprise entre 8 % et 20 %, les lumières d'échappement étant alors entièrement démasquées.

L'invention est applicable aux tuyères dépourvues de corps central interne : l'augmentation de la section de sortie est alors due au diamètre plus important de l'extrémité aval de la jupe mobile par rapport à la sortie de la chemise fixe ; dans ce cas, le diamètre de l'extrémité aval de la jupe est prévu notablement plus grand que celui de la sortie de chemise afin d'assurer l'augmentation de section désirée.

L'invention est également applicable aux tuyères qui contiennent un corps central possédant une partie convergente située en regard de la sortie de chemise fixe ; le recul de la jupe mobile engendre alors une augmentation de la section de sortie qui est due au moins en partie au rétrécissement du corps central. Dans ce cas, le diamètre de l'extrémité aval de la jupe mobile peut être proche de celui de la sortie de chemise fixe.

D'autres caractéristiques, buts et avantages de l'invention ressortiront de la description qui suit en référence aux dessins annexés, lesquels en présentent, à titre d'exemple non limitatif, un mode de réalisation et une variante ; sur ces dessins :
- la figure 1 est une coupe schématique partielle par deux plans longitudinaux PP' d'une tuyère conforme à l'invention du type à corps central conique long,
- la figure 2 en est une coupe transversale par un plan T,
- la figure 3 est une vue en perspective schématique avec arraché partiel de ladite tuyère,
- la figure 4 est une perspective de détail montrant un des mécanismes d'entraînement à vis sans fin,
- les figures 5a, 5b et 5c sont des coupes de détail montrant ledit mécanisme d'entraînement, respectivement en position amont de croisière, en position aval intermédiaire, dite de jet direct, et en position aval extrême, dite d'inversion,
- les figures 6a, 6b et 6c sont des coupes de détail montrant un des clapets d'obturation, respectivement dans les trois positions précitées,
- les figures 7a, 7b et 7c sont des coupes partielles montrant l'extrémité de la tuyère respectivement dans les trois positions précitées,
- enfin les figures 8a, 8b et 8c schématisent en coupe longitudinale partielle une variante de tuyère, respectivement dans les trois positions sus-évoquées.

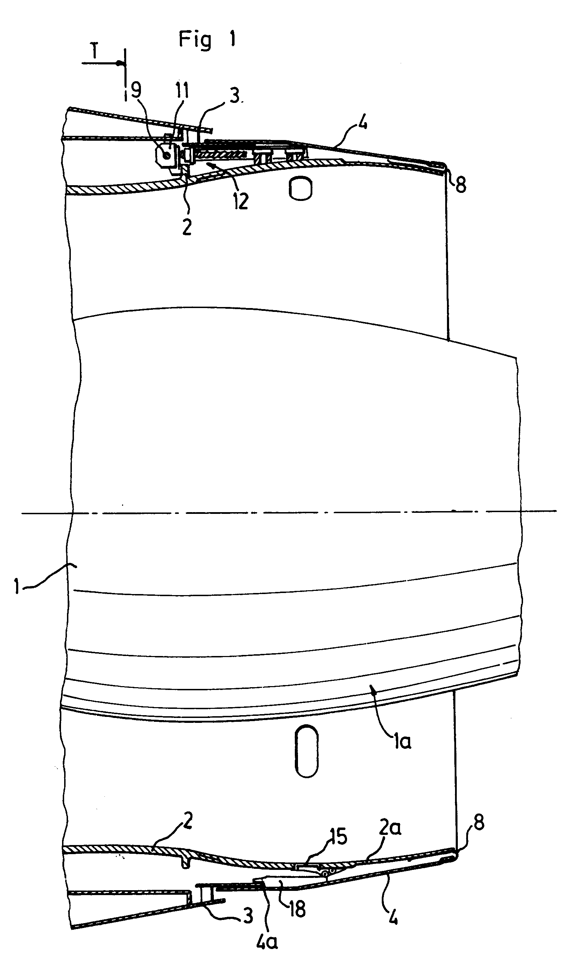

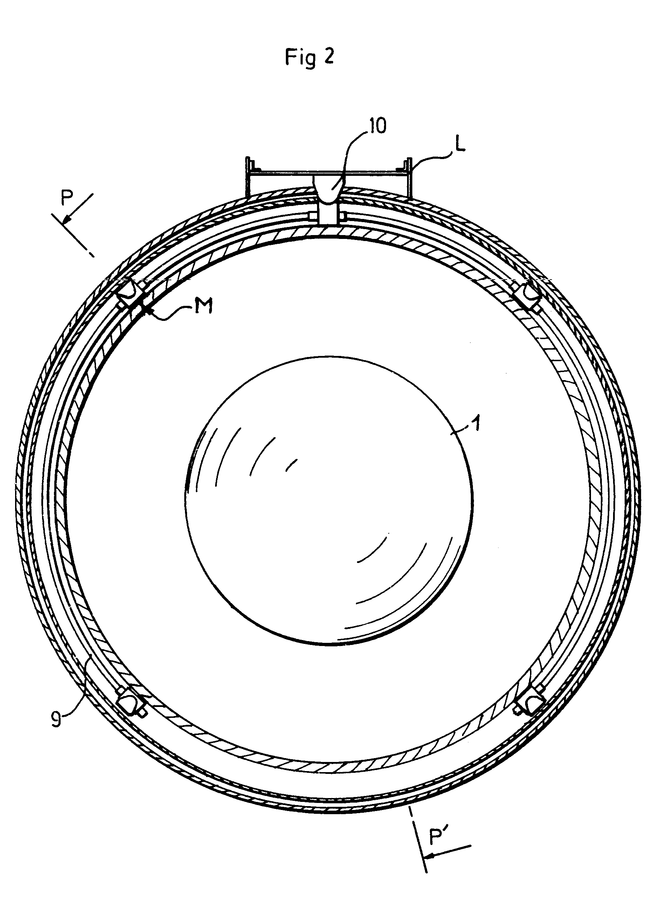

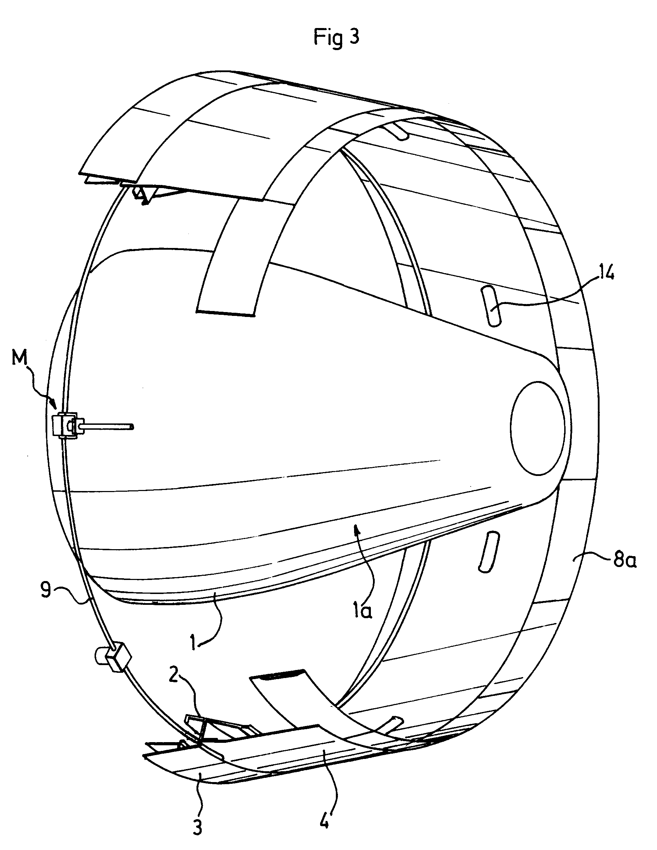

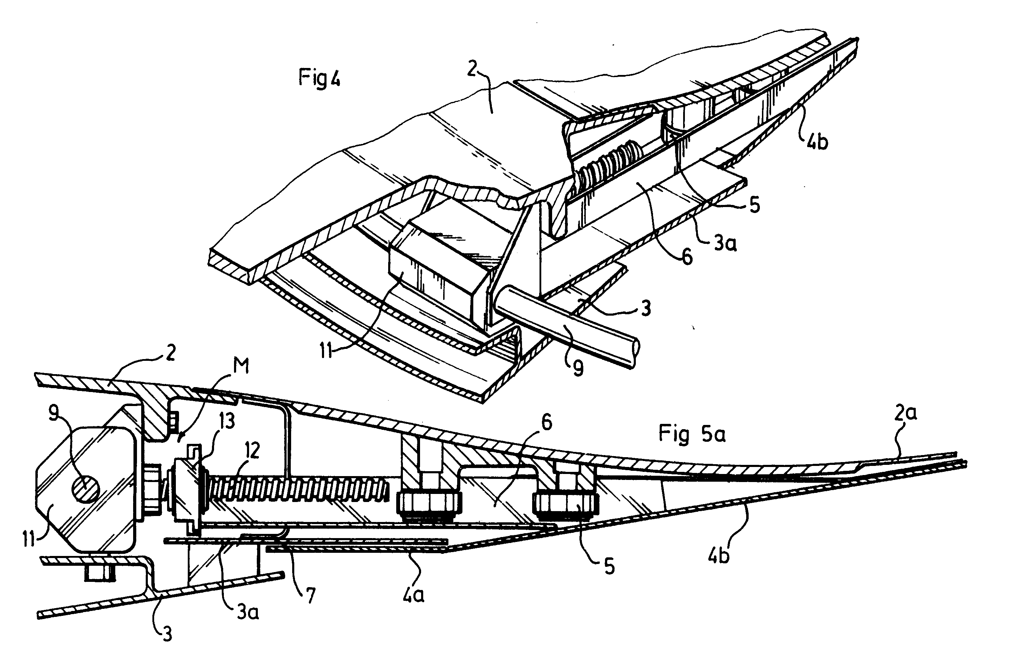

La tuyère représentée à titre d'exemple aux figures 1 à 7 est une tuyère centrale de réacteur à flux séparés, qui est destinée à l'éjection des gaz chauds à l'arrière du réacteur. De façon classique, le réacteur est équipé d'un corps central 1 qui émerge de la tuyère centrale par une portion conique convergente 1a et d'une tuyère périphérique d'éjection des gaz froids (non visible) dotée d'un système d'inversion de poussée permettant d'inverser le jet afin de produire une contre-poussée de freinage.

L'invention vise essentiellement, d'une part, à réduire la poussée des gaz chauds éjectés par la tuyère centrale en phase d'inversion de poussée, d'autre part, à permettre une augmentation de la poussée totale des gaz chauds et froids en phase de décollage par temps chaud.

De façon classique, la tuyère centrale est délimitée à sa périphérie par une paroi fixe annulaire qui est constituée d'une chemise interne 2 et d'une chemise externe 3 formant avec ladite chemise interne un caisson annulaire dans la partie amont de tuyère. La chemise interne 2 se prolonge par une portion arrière 2a de forme convergente vers la sortie de tuyère.

Autour de la chemise interne 2, la tuyère est équipée d'une jupe annulaire 4 composée d'une portion amont cylindrique 4a et d'une portion aval 4b de forme conique convergente vers la sortie de tuyère. A sa portion amont cylindrique, cette jupe de section transversale circulaire est guidée par la paroi fixe de tuyère grâce à des systèmes de guidage répartis autour de la tuyère, de façon à être mobile en translation parallèlement à l'axe longitudinal de tuyère.

Chaque système de guidage comprend en l'exemple des galets tels que 5 situés autour de la chemise interne et solidaires de celles-ci et un rail 6 solidaire de la jupe 4 ; en outre, un patin 7 solidaire de la jupe 4 est guidé par une portion de paroi cylindrique 3a qui est assujettie à la chemise externe 3.

L'extrémité de la portion aval 4b de la jupe présente un diamètre légèrement supérieur à celui de la section de sortie de la chemise interne. Une couronne semi-flexible 8, composée d'une pluralité de secteurs tels que 8a, est fixée à l'extrémité de la jupe en vue de réaliser une jonction entre celle-ci et la chemise interne 2.

Par l'élasticité du matériau qui la constitue et sa structure divisée en secteurs, cette couronne est apte à venir en appui élastique autour de la chemise interne 2 et à demeurer au contact de la face externe de celle-ci au cours du déplacement de la jupe ; en l'exemple, ladite couronne présente une portion amont incurvée 8a, suivie d'une portion conique divergente 8b.

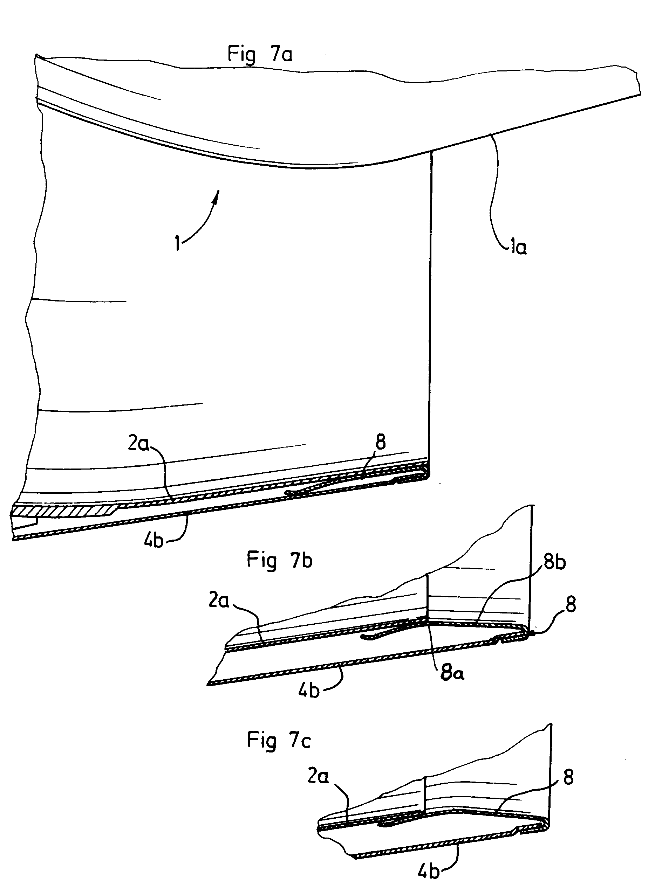

La jupe mobile 4 et sa couronne semi-flexible 8 peuvent ainsi adopter les positions schématisées aux figures 7a, 7b et 7c :
- une position amont dans laquelle l'extrémité arrière de la jupe 4 est située en retrait autour de la chemise interne 2 au voisinage de sa section de sortie, la couronne semi-flexible 8 étant comprimée entre la jupe et la chemise interne (figure 7a),
- une position aval intermédiaire, dans laquelle la portion incurvée 8a de la couronne vient sensiblement en correspondance avec la section de sortie de la chemise interne (figure 7b),
- une position aval extrême, correspondant au recul maximum de la jupe 4 et de la couronne semi-flexible 8.

Le déplacement de la jupe 4 est assuré par un flexible tournant 9 qui est disposé autour de la chemise interne 2 dans le caisson que celle-ci délimite avec la chemise externe 3. Ce flexible est entraîné en rotation par un groupe moto-réducteur 10 qui est situé à la partie haute de la tuyère et peut par exemple être fixé sur le longeron inférieur L du mât de réacteur.

Plusieurs mécanismes à vis sans fin tels que M sont répartis le long du flexible tournant 9 afin d'assurer l'entraînement de la jupe 4.

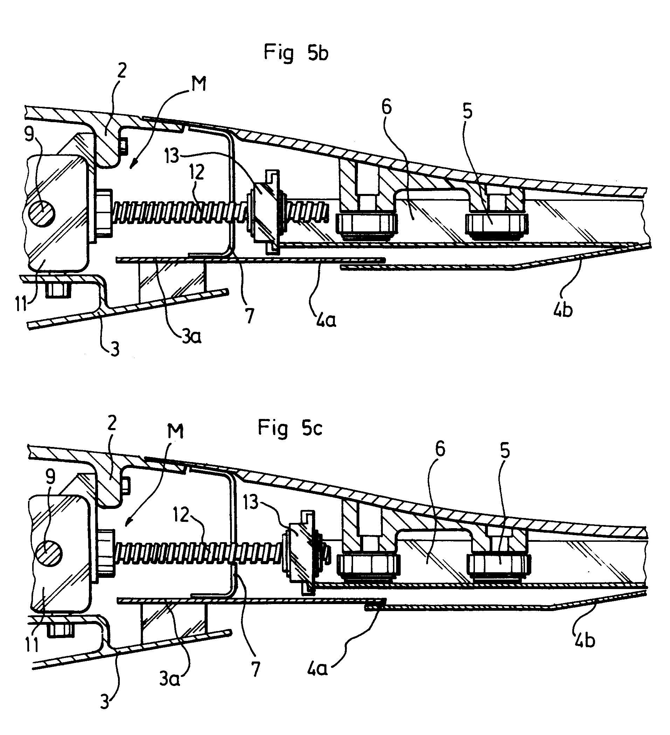

Chaque mécanisme est identique à celui qui est représenté en détail aux figures 5a, 5b, 5c. Chaque mécanisme comprend un carter 11 assujetti dans le caisson et contenant les organes mécaniques classiques en prise avec le flexible 9, une vis sans fin 12 et un boulon mobile de sortie 13 solidaire de la jupe 4 de façon à entraîner celle-ci en translation axiale sous l'effet de la rotation des vis sans fin 12 provenant de celle du flexible 9.

Par ailleurs, à des positions angulaires décalées par rapport à celles des mécanismes d'entraînement M, des lumières d'échappement telles que 14 sont ménagées dans la chemise interne 2. Des moyens d'obturation sont associés à ces lumières afin d'obturer celles-ci et de les démasquer lorsque la jupe mobile 4 parvient dans la position aval extrême.

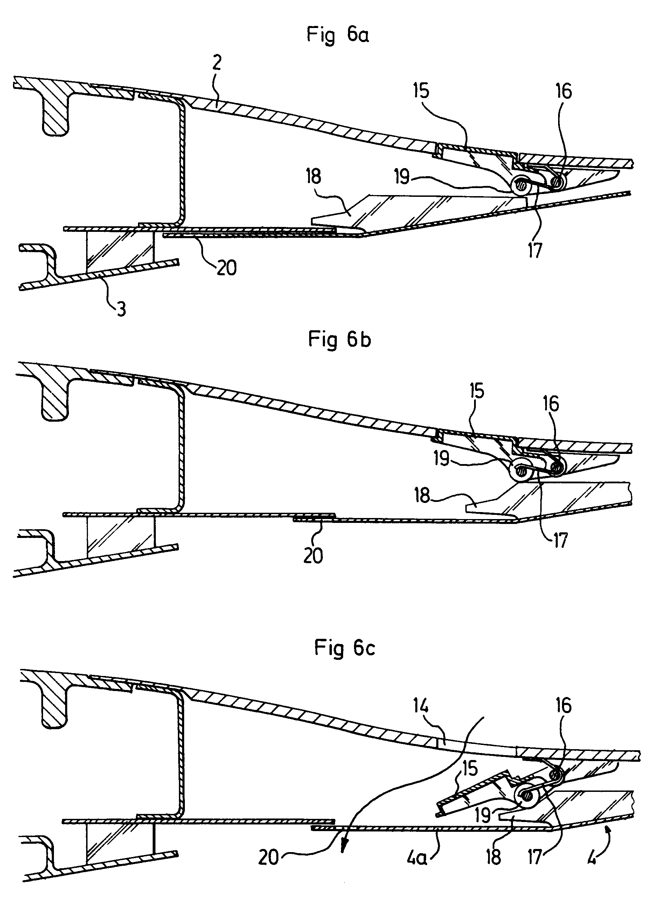

Ces moyens d'obturation sont représentés en détail aux figures 6a, 6b et 6c respectivement dans la position amont de croisière, la position aval intermédiaire (position de jet direct) et dans la position aval extrême (position d'inversion de poussée).

A chaque lumière 14, est associé un clapet étanche pivotant 15 qui est porté par un axe 16 et est sollicité vers sa position de fermeture par des moyens élastiques tels que ressort 17. Une came 18 formant chemin de roulement pour un galet 19 solidaire du clapet assure l'ouverture du clapet lors du recul de la jupe 4 lorsque celle-ci parvient dans la position aval extrême. En outre, des ouvertures 20 ménagées à l'arrière de la jupe se trouvent alors découvertes afin de créer une fuite de gaz vers l'extérieur.

En phase normale de vol (position croisière correspondant aux figures 5a, 6a et 7a), la jupe 8 est entièrement en retrait autour de la chemise interne 2. La face interne de celle-ci est continue et aucun organe n'est plongé dans le flux chaud. La tuyère se comporte comme une tuyère classique, avec une section utile de sortie donnée (différence entre la section de la chemise interne et la section du corps central).

Par temps chaud, en phase de décollage, le pilote peut commander le recul de la jupe pour la disposer en position intermédiaire aval (figures 6b, 7b, 8b). Dans cette position, la tuyère est prolongée et sa section de sortie est accrue du fait, d'une part, du diamètre supérieur de l'extrémité arrière de la jupe 8, d'autre part, du rétrécissement du corps central. En pratique, une augmentation de section comprise entre 5 et 15 %, en particulier de l'ordre de 10 %, entraîne une diminution de la température des gaz chauds à régime donné : cette température étant le facteur limitant au cours de cette phase de vol, le pilote peut ainsi augmenter le régime du moteur pour rétablir la température et obtenir un accroissement de la poussée totale de l'ordre de 5 %. Il est à noter que, dans cette position, la face interne de la tuyère demeure continue jusqu'à la section de sortie.

En phase d'inversion de poussée, la commande par le pilote des inverseurs de poussée de la tuyère périphérique détermine le recul de la jupe 4 jusqu'à sa position extrême aval. Il est à noter que ce recul est asservi à ces inverseurs de poussée de façon à être interdit en jet direct. L'augmentation de sortie, en particulier comprise entre 8 et 20 %, et notamment de l'ordre de 12 %, engendre à régime moteur constant (débit constant) une réduction de la température des gaz chauds et de leur vitesse de sortie, et par voie de conséquence, une diminution de la poussée directe. En outre, les lumières 14 et ouvertures 20 sont alors démasquées et cette perturbation de l'écoulement réduit encore la poussée du flux chaud.

Il est ainsi possible de limiter considérablement l'influence de la poussée des gaz chauds en phase d'inversion, de façon à obtenir une contre-poussée très améliorée par rapport à celle des réacteurs connus.

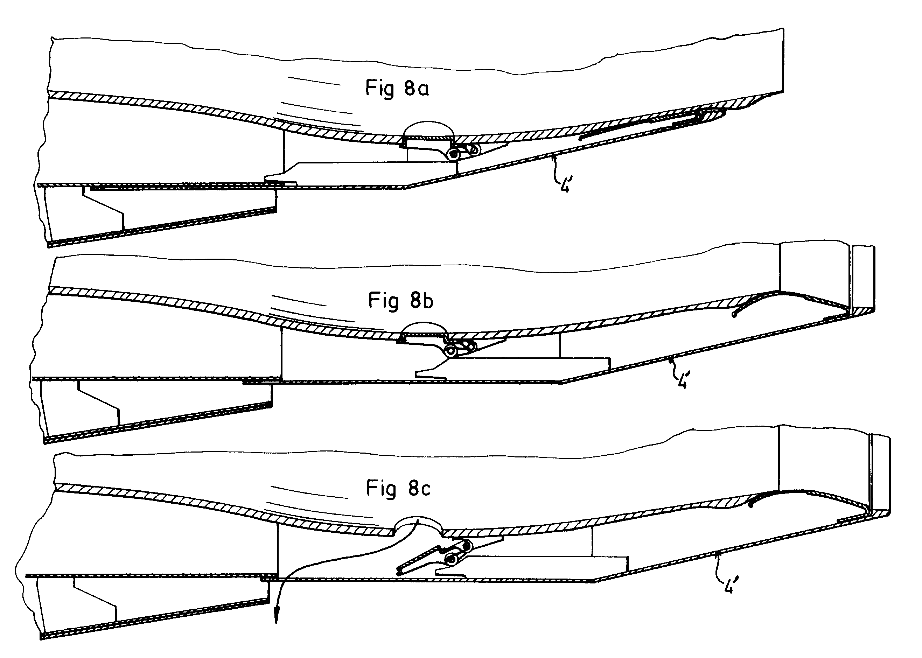

Les figures 8a, 8b, 8c présentent une variante de tuyère, respectivement en position amont (croisière), en position intermédiaire aval (jet direct) et en position extrême aval (inversion de poussée).

Cette variante est destinée à équiper un réacteur à corps central court (non émergeant). Les divers organes de la tuyère sont similaires à ceux décrits précédemment, mais dans ce cas, la jupe mobile 4' est conformée de façon à présenter un diamètre d'extrémité très supérieur au diamètre de la section de la chemise interne ; cette jupe et ses moyens de déplacement sont agencés pour permettre dans la position amont un retrait plus important autour de la chemise interne, comme le schématise la figure 8a.

L'augmentation de la section de sortie est dans ce cas uniquement due au diamètre accru de l'extrémité de jupe aussi bien dans la position intermédiaire aval (figure 8b) que dans la position extrême aval (figure 8c). Elle peut être de l'ordre de 5 à 15 %.

## Revendications

1. Tuyère d'éjection, à section de sortie variable, pour moteur à réaction, du type comprenant une paroi fixe présentant une chemise interne (2) de forme convergente vers la sortie de tuyère, caractérisée en ce qu'elle comprend :
- une jupe annulaire (4) mobile axialement, disposée autour de la chemise interne (2) et composée d'une portion amont cylindrique (4a) guidée par la paroi fixe de tuyère et d'une portion aval (4b) de forme convergente vers la sortie de tuyère, l'extrémité de ladite portion aval ayant un diamètre supérieur à celui de la section de sortie de la chemise interne,
- des moyens de guidage et de déplacement axial de la jupe mobile (5-7, 9-12), disposés autour et à l'extérieur de la chemise interne (2) et adaptés pour permettre de mouvoir ladite jupe dans une translation axiale entre une position amont où la jupe est entièrement située en retrait autour de la chemise interne et une position aval où l'extrémité aval de la jupe est située à l'arrière de la section de sortie de la chemise interne,
- une couronne semi-flexible (8) de jonction entre la jupe mobile (4) et la chemise interne fixe (2), ladite couronne semi-flexible étant liée à la jupe de façon à se déplacer avec celle-ci et venant en appui élastique autour de la chemise interne de façon à demeurer au contact de la face externe de celle-ci au cours de son déplacement.

2. Tuyère d'éjection selon la revendication 1, caractérisée en ce que la couronne semi-flexible (8) est composée d'une pluralité de secteurs (8a) fixés à l'extrémité aval de la jupe mobile (4) tout autour de cette dernière.

3. Tuyère d'éjection selon l'une des revendications 1 ou 2, dans laquelle la paroi fixe comprend la chemise interne (2) précitée et une chemise externe (3) formant avec ladite chemise interne un caisson annulaire dans la partie amont de tuyère, caractérisée en ce que la jupe mobile (4) est guidée par des systèmes de guidage (5-7) répartis autour de la chemise interne et logés dans le caisson annulaire précité, les moyens de déplacement axial étant eux-mêmes logés dans ledit caisson annulaire.

4. Tuyère d'éjection selon la revendication 3, caractérisée en ce que les moyens de déplacement axial comprennent un flexible tournant (9) disposé autour de la chemise interne (2) dans le caisson précité, un groupe moto-réducteur (10) d'entraînement en rotation dudit flexible, et plusieurs mécanismes à vis sans fin (12) répartis le long du flexible tournant, chaque mécanisme ayant un carter (11) assujetti dans le caisson et une sortie mobile (13) solidaire de la jupe (4) de façon à entraîner celle-ci en translation axiale sous l'effet de la rotation du flexible.

5. Tuyère centrale d'éjection de gaz chauds conforme à l'une des revendications 1 à 4, équipant un réacteur à flux séparés en vue de permettre d'augmenter à la commande la section de sortie des gaz chauds.

6. Tuyère selon la revendication 5, caractérisée en ce que la chemise interne (2) comprend des lumières d'échappement (14) et des moyens d'obturation desdites lumières (15-19) agencés pour démasquer celles-ci lorsque la jupe mobile (4) parvient dans une position aval prédéterminée.

7. Tuyère d'éjection selon la revendication 6, caractérisée en ce que les moyens d'obturation comprennent des clapets étanches pivotants (15), des moyens élastiques (17) maintenant chaque clapet appliqué sur une lumière d'échappement (14) et un système de cames (18, 19) associé à la jupe mobile et adapté pour assurer l'ouverture des clapets lorsque ladite jupe parvient dans la position aval précitée.

8. Tuyère d'éjection selon l'une des revendications 6 ou 7, caractérisée en ce que la jupe mobile (4) comprend dans sa portion arrière des ouvertures (20) agencées pour être découvertes lorsque ladite jupe parvient dans la position aval précitée en vue de créer une fuite de gaz vers l'extérieur.

9. Tuyère d'éjection selon la revendication 8, caractérisée en ce que la jupe mobile (4) et les moyens de guidage et déplacement axial sont adaptés pour permettre d'assigner à ladite jupe mobile trois positions :
. une position amont, dite de croisière, où la jupe (4) est située en retrait autour de la chemise interne (2),
. une position aval intermédiaire, dite de jet direct, où la jupe dépasse à l'arrière de la chemise interne et réalise une augmentation de la section de sortie comprise entre 5 % et 15 %, les lumières d'échappement (14) demeurant entièrement obturées par les moyens d'obturation, cependant que les ouvertures (20) de la jupe demeurent couvertes,
. une position aval extrême, dite d'inversion, où la jupe est située en arrière par rapport à la position précédente et réalise une augmentation de la section de sortie comprise entre 8 % et 20 %, les lumières d'échappement (14) étant entièrement démasquées, et les ouvertures (20) découvertes.

10. Tuyère d'éjection selon la revendication 9, équipant un réacteur doté d'un corps central (1) se prolongeant selon l'axe de ladite tuyère, la section de sortie de la tuyère étant située en regard de la portion convergente (1a) de ce corps central de sorte que le recul de la jupe mobile (4) engendre une augmentation de la section de sortie, due au moins en partie au rétrécissement du corps central.

11. Moteur à réaction à flux séparés, comprenant une tuyère périphérique d'éjection des gaz froids, associée à un système d'inversion de poussée, et une tuyère centrale d'éjection des gaz chauds conforme à l'une des revendications 5 à 10.

## Claims

1. Ejection nozzle with a variable outlet cross section for a jet engine of the type having a fixed wall with an inner jacket (2), the shape of which converges towards the nozzle outlet, characterised in that it comprises:
- an axially mobile annular skirt (4) arranged about the inner jacket (2) and comprising a cylindrical upstream part (4a) guided by the fixed nozzle wall and a downstream part (4b), the shape of which converges towards the nozzle outlet, with the end of said downstream part having a diameter larger than that of the outlet section of the inner jacket,
- means for axially guiding and displacing the mobile skirt (5-7, 9-12) arranged about and outside the inner jacket (2) and so designed as to enable said skirt to be moved by axial translation between an upstream position in which the skirt is entirely retracted about the inner jacket and a downstream position in which the downstream end of the skirt is situated at the rear of the outlet section of the inner jacket,
- a semi-flexible rim (8) acting as a joint between the mobile skirt (4) and the fixed inner jacket (2), said semi-flexible rim being connected with the skirt so as to be displaced together with said skirt and so as to be applied in elastic manner about the inner jacket in order to remain in contact with the outer face of said jacket while it is being displaced.

2. Ejection nozzle according to Claim 1, characterised in that the semi-flexible rim (8) comprises a plurality of segments (8a) secured to the downstream end of the mobile skirt (4) about the latter.

3. Ejection nozzle according to one of Claims 1 or 2 in which the fixed wall comprises the aforementioned inner jacket (2) and an outer jacket (3) forming together with said inner jacket an annular casing within the upstream part of the nozzle, characterised in that the mobile skirt (4) is guided by guiding systems (5-7) distributed about the inner jacket and located within the aforementioned annular casing, the means for axial displacement being themselves located within said annular casing.

4. Ejection nozzle according to Claim 3, characterised in that the means for axial displacement comprise a flexible rotary shaft (9) arranged about the inner jacket (2) within the aforementioned casing, a reduction gearing (10) for driving said flexible shaft in rotation and several worm mechanisms (12) arranged along the flexible rotary shaft, each mechanism having a gearbox (11) secured within the casing and a mobile outlet (13) firmly connected with the skirt (4) so as to drive the latter by axial translation due to the rotation of the flexible shaft.

5. Central nozzle for ejecting hot gases according to one of Claims 1 to 4, pertaining to a jet engine with separate flows so as to enable the cross section of the hot-gas outlet to be increased on command.

6. Nozzle according to Claim 5, characterised in that the internal jacket (2) comprises exhaust openings (14) and means for blocking said openings (15-19) so arranged as to expose the latter when the mobile skirt (4) reaches a predetermined downstream position.

7. Ejection nozzle according to Claim 6, characterised in that the blocking means comprise tightly closing pivoting flaps (15), elastic means (17) holding each flap against an exhaust opening (14) and a system of cams (18,19) associated with the mobile skirt and so designed as to ensure opening of the flaps when said skirt reaches the aforementioned downstream position.

8. Ejection nozzle according to one of Claims 6 or 7, characterised in that the mobile skirt (4) comprises, within its rear part, openings (20) so arranged as to be uncovered when said skirt reaches its aforementioned downstream position, with a view to causing gas to escape to the outside.

9. Ejection nozzle according to Claim 8, characterised in that the mobile skirt (4) and the means for axial guiding and displacement are so designed as to enable said mobile skirt to assume three positions:
. an upstream position, the so-called cruising position, in which the skirt (4) is retracted about the internal jacket (2),
. an intermediate downstream position, the so-called direct jet position, in which the skirt projects to the rear of the inner jacket and causes the cross section of the outlet to be increased by a value between 5 % and 15 %, the exhaust openings (14) remaining entirely blocked by the blocking means whereas the openings (20) of the skirt remain covered,
. an extreme downstream position, the so-called inversion position, in which the skirt is situated to the rear of the preceding position and causes the cross section of the outlet to be increased by a value between 8 % and 20 %, the exhaust openings (14) being entirely exposed and the openings (20) uncovered.

10. Ejection nozzle according to Claim (9) pertaining to a jet engine endowed with a central body (1) located in line with the axis of said nozzle, whereby the outlet section of the nozzle is situated opposite the converging part (1a) of said central body so that recoil of the mobile skirt (4) causes the outlet cross section to increase, said increase being at least partly due to the retraction of the central body.

11. Jet engine with separate flows, comprising a peripheral nozzle for ejecting cold gases, said nozzle being associated with a thrust inversion system, and further comprising a central nozzle for ejecting hot gases, according to one of Claims 5 to 10.

## Patentansprüche

1. Ausstoßdüse mit variablem Austrittsquerschnitt für einen Strahlmotor, wobei die besagte Ausstoßdüse der Art mit einer eine Innenverkleidung (2) sich auf den Düsenaustritt zu verjüngender Form aufweisenden festen Wand ist, dadurch gekennzeichnet, daß sie die folgenden Teile umfaßt:
- eine rings um die Innenverkleidung (2) angeordnete, axial bewegliche ringförmige Hülle (4), die einen durch die feste Düsenwand geführten vorderen zylindrischen Abschnitt (4a) umfaßt, sowie einen hinteren Abschnitt (4b) von sich auf den Düsenaustritt zu verjüngender Form, wobei das Ende des besagten hinteren Abschnitts einen Durchmesser aufweist, der größer ist, als der des Austrittsabschnitts der Innenverkleidung,
- Mittel zum Führen und axialen Verschieben der beweglichen Hülle (5-7, 9-12), die rings um und außerhalb der Innenverkleidung (2) angeordnet und so beschaffen sind, daß sie Bewegung der besagten Hülle in axialer Richtung zwischen einer vorderen Lage, in der die Hülle völlig um die Innenverkleidung herum zurückgezogen ist, und einer hinteren Lage, in der das hintere Ende der Hülle hinter dem Austrittsabschnitt der inneren Verkleidung angeordnet ist, gestatten,
- einen halbflexiblen Ring (8) zum Verbinden der beweglichen Hülle (4) und der festen Innenverkleidung (2), wobei der besagte halbflexible Ring mit der Hülle so verbunden ist, daß er sich gemeinsam mit dieser verschiebt und rings um die Innenverkleidung elastisch angelegt wird, so daß er während seiner Verschiebung mit der Außenfläche der besagten Innenverkleidung in Kontakt bleibt.

2. Ausstoßdüse nach Anspruch 1, dadurch gekennzeichnet, daß der halbflexible Ring (8) eine Mehrzahl von Abschnitten (8a) umfaßt, die an dem hinteren Ende der beweglichen Hülle (4) rings um die besagte bewegliche Hülle befestigt sind.

3. Ausstoßdüse nach einem der Ansprüche 1 oder 2, bei der die feste Wand die vorstehend genannte Innenverkleidung (2) sowie eine Außenverkleidung (3) umfaßt, die gemeinsam mit der besagten Innenverkleidung in dem vorderen Bereich der Düse ein ringförmiges Gehäuse bildet, dadurch gekennzeichnet, daß die bewegliche Hülle (4) durch rings um die Innenverkleidung verteilte und in dem besagten ringförmigen Gehäuse eingebaute Führungseinrichtungen (5-7) geführt wird, wobei die Mittel für axiale Verschiebung ihrerseits in dem ringförmigen Gehäuse eingebaut sind.

4. Ausstoßdüse nach Anspruch 3, dadurch gekennzeichnet, daß die Mittel für axiale Verschiebung eine rings um die Innenverkleidung (2) in dem besagten Gehäuse angeordnete flexible Drehwelle (9), ein Untersetzungsgetriebe (10) für drehenden Antrieb der besagten flexiblen Drehwelle und mehrere entlang der flexiblen Drehwelle verteilte Schneckenmechanismen (12) umfassen, wobei jeder Mechanismus ein mit dem Gehäuse in Verbindung stehendes Getriebegehäuse (11) und einen mit der Hülle (4) fest verbundenen beweglichen Ausgang (13) umfaßt, um die besagte Hülle infolge der Drehung der flexiblen Drehwelle axial zu verschieben.

5. Mitteldüse zum Ausstoß heißer Gase nach einem der Ansprüche 1 bis 4 für einen Strahlmotor mit getrennten Strömen, um auf Befehl gesteuerte Vergrößerung des Austrittsquerschnitts für heiße Gase zu gestatten.

6. Düse nach Anspruch 5, dadurch gekennzeichnet, daß die Innenverkleidung (2) Austrittsöffnungen (14) und Mittel zum Verschluß der besagten Öffnungen (15-19) umfaßt, die so angeordnet sind, daß sie die besagten Austrittsöffnungen öffnen, wenn die bewegliche Hülle (4) in eine vorbestimmte hintere Lage gelangt.

7. Ausstoßdüse nach Anspruch 6, dadurch gekennzeichnet, daß die Verschlußmittel schwenkbare dichte Klappen (15), elastische Mittel (17), die jede Klappe an eine Austrittsöffnung (14) angepreßt halten, und ein mit der beweglichen Hülle in Verbindung stehendes Nockensystem (18,19) umfassen, wobei das besagte Nockensystem so beschaffen ist, daß es Öffnen der Klappen bewirkt, wenn die besagte Hülle in die vorstehend genannte hintere Lage gelangt.

8. Ausstoßdüse nach einem der Ansprüche 6 oder 7, dadurch gekennzeichnet, daß die bewegliche Hülle (4) in ihrem hinteren Abschnitt Öffnungen (20) umfaßt, die so angeordnet sind, daß sie bloßgelegt werden, wenn die besagte Hülle in die vorstehend genannte hintere Lage gelangt, um Entweichen der Gase nach außen hin zu bedingen.

9. Ausstoßdüse nach Anspruch 8, dadurch gekennzeichnet, daß die bewegliche Hülle (4) und die Mittel für axiale Führung und Verschiebung so beschaffen sind, daß sie das Einstellen der besagten beweglichen Hülle in die folgenden drei Lagen gestatten:
. eine vordere Lage, die sogenannte Reiselage, in der die Hülle (4) rings um die Innenverkleidung (2) zurückgezogen ist,
. eine hintere Zwischenlage, die sogenannte Direktstrahllage, in der die Hülle über das hintere Ende der Innenverkleidung hinausgeht und eine Vergrößerung des Austrittsquerschnitts zwischen 5% und 15% bewirkt, wobei die Austrittsöffnungen (14) durch die Verschlußmittel völlig verschlossen bleiben, während die Öffnungen (20) der Hülle bedeckt bleiben,
. eine hintere Endlage, die sogenannte Umlenklage, in der sich die Hülle hinter der vorstehend genannten Lage befindet und eine Vergrößerung des Austrittsquerschnitts zwischen 8% und 20% bewirkt, wobei die Austrittsöffnungen (14) völlig geöffnet und die Öffnungen (20) bloßgelegt sind.

10. Ausstoßdüse nach Anspruch 9 für einen Strahlmotor mit einem Mittelkörper (1), der sich in axialer Richtung der besagten Düse erstreckt, wobei sich der Austrittsabschnitt der Düse gegenüber dem sich verjüngenden Abschnitt (1a) des besagten Mittelkörpers befindet, so daß Rückstoß der beweglichen Hülle (4) eine Vergrößerung des Austrittsquerschnitts bewirkt, die mindestens teilweise auf den Rückzug des Mittelkörpers zurückzuführen ist.

11. Strahlmotor mit getrennten Strömen, umfassend eine periphere Düse für den Ausstoß kalter Gase, die mit einem Schubumlenksystem in Verbindung steht, sowie einer Mitteldüse für den Ausstoß heißer Gase nach einem der Ansprüche 5 bis 10.
